# EUROPÄISCHE PATENTSCHRIFT

(11) **EP 2 066 874 B1**
(45) Veröffentlichungstag und Bekanntmachung des Hinweises auf die Patenterteilung: **30.04.2014**
(21) Anmeldenummer: 07818100.5
(22) Anmeldetag: 11.09.2007
(51) Int. Cl.: F01L 1/34, F02D 13/02

(54) **BRENNKRAFTMASCHINE MIT GEMISCHTEN NOCKENWELLEN**
INTERNAL COMBUSTION ENGINE WITH MIXED CAMSHAFTS
MOTEUR À COMBUSTION INTERNE À ARBRES À CAMES MIXTES

(30) Priorität: 13.09.2006 DE 102006042912
(43) Veröffentlichungstag der Anmeldung: 10.06.2009
(73) Patentinhaber: Volkswagen Aktiengesellschaft, 38440 Wolfsburg (DE)
(72) Erfinder: GROENENDIJK, Axel, 38518 Gifhorn (DE); CORNELIUS, Volker, 38162 Cremlingen (DE)
(86) Internationale Anmeldenummer: PCT/EP2007/007897
(87) Internationale Veröffentlichungsnummer: WO 2008/031555

(56) Entgegenhaltungen:
- WO-A-01/42627
- DE-A1- 10 117 541
- DE-A1- 10 122 775
- DE-A1- 10 359 058
- DE-T1- 19 581 571
- US-A1- 2003 226 528

## Beschreibung

Die Erfindung betrifft eine Brennkraftmaschine, arbeitend nach dem Selbstzündverfahren, insbesondere eines Kraftfahrzeugs, mit wenigstens einem Arbeitszylinder, wobei jedem Arbeitszylinder wenigstens zwei Einlassventile und wenigstens ein Auslassventil zugeordnet ist, wobei zwei Nockenwellen vorgesehen sind, von denen wenigstens eine Nockenwelle sowohl wenigstens ein Einlassventil als auch wenigstens ein Auslassventil betätigt, gemäß dem Oberbegriff des Patentanspruchs 1 und ein Verfahren zum Betrieben einer solchen Brennkraftmaschine gemäß Patentanspruch 6.

Beim bekannten Miller/Atkinson-Cycle wird der Zeitpunkt "Einlassventil schließt" (ES) nach spät verschoben. Auf diese Weise wird bereits im Zylinder befindliches Frischgas z.T. wieder ausgeschoben. Dies bedeutet einen Füllungsnachteil, der aber über eine Aufladung mit einem geeigneten Ladedruck kompensiert werden kann. Dabei ist der Ladedruck im Volumen zwischen Laderausgang und Motoreinlass so zu regeln, dass der Ladedruck in jedem Miller-Betriebspunkt, d.h. jeder Betriebspunkt in dem der "MillerCycle" zur Anwendung kommt, dem theoretischen Verdichtungsenddruck in den Arbeitszylindern der Brennkraftmaschine zum Zeitpunkt Einlassventil schließt entspricht. Für die Regelung, wahlweise auch Steuerung, kommen Druck- und/oder Temperatur- und/oder Massenstromsensoren oder sinnvolle Kombisensoren der drei angesprochenen Sensortypen zum Einsatz.

Der positive Effekt des Miller/Atkinson-Cycles mittels frühem oder spätem Zeitpunkt für das Schließen des Einlassventils auf die NOₓ-Emission und Homogenislerbarkeit des Dieselgemischs ist bekannt. Weiterhin kann bei ottomotorischen Anwendungen die Klopfneigung bei Hochaufladung deutlich reduziert werden. Im Gegensatz zum Ottomotor, der aufgrund fehlender geometrischer Zwänge mit positiver Ventilüberschneidung arbeiten kann, ist beim Dieselmotor eine einfache Umsetzung des Verfahrens mit Hilfe eines Phasenstellers generell nicht möglich. Grund hierfür ist eine mechanische Kollision des Ventils mit dem Kolben bei Frühverstellung und vermehrte Pumparbeit bei Spätverstellung.

Aus der DE 44 26 557 A1 ist es bekannt, bei Arbeitszylindern einer Brennkraftmaschine Ventile diagonal gegenüberliegend anzuordnen, so dass zwei Nockenwellen jeweils einen Teil der Einlassventile steuern. Auf diese Weise sind zwei getrennte Einlasssysteme geschaffen, die zwar unterschledliche Steuerzeiten aufweisen, wobei diese Steuerzeiten jedoch festgelegt sind.

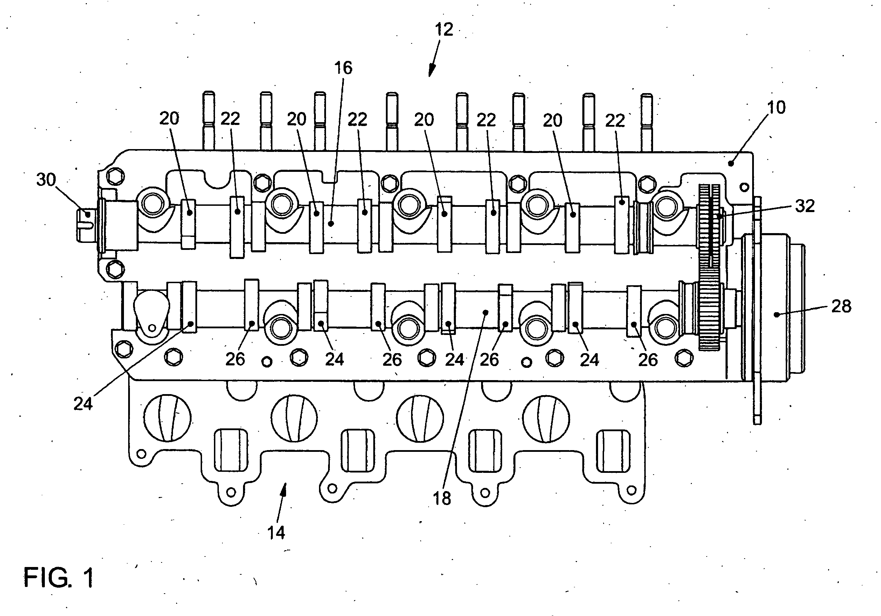

Aus der DE 103 59 058 A1 ist eine vierventilige Brennkraftmaschine mit zwei Einlass- und zwei Auslassventilen und insgesamt drei Nockenwellen bekannt. Gemäß einer Ausführungsform (Figur 1) ist einer ersten Nockenwelle ein Einlass- und ein Auslassventil zugeordnet, während eine zweite Nockenwelle das zweite Einlassventil betätigt und eine dritte Nockenwelle das zweite Auslassventil. Der ersten und zweiten Nockenwelle ist jeweils ein Phasensteller zugeordnet. Die beschriebene Nockenwellen- und Ventilanordnung soll in einer Benzin-Brennkraftmaschine eingesetzt werden, könne jedoch auch bei einer selbstzündenden Brennkraftmaschine eingesetzt werden. Die mittels der Phasensteller zu erzielenden Verschiebungen der Ventilerhebungskurven führen bei einer selbstzündenden Brennkraftmaschine unweigerlich zu einer Kollislon zwischen den Hubkolben und den Ventilen. Es bleibt offen, wie mit der vorgeschlagenen Anordnung dieses Problem zu beseitigen wäre. Darüber hinaus ist die vorgeschlagene Anordnung mit einem hohen Bauteileaufwand verbunden, da insgesamt drei Nockenwellen und zwei Phasensteller von Nöten sind.

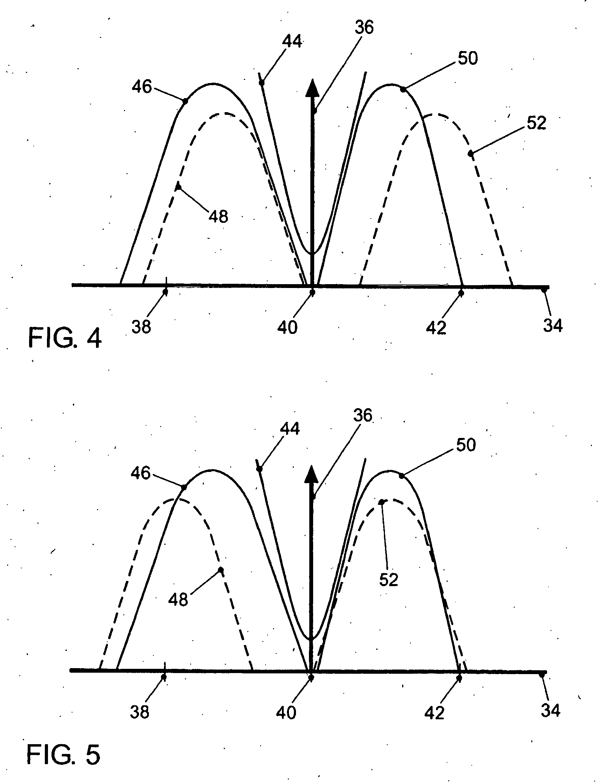

Aus der DE 195 81 571 T1 ist eine vierventilige Diesel-Brennkraftmaschine gemäß Figur 1 bekannt, wobei eine ersten Nockenwelle eines der Einlassventile und beide Auslassventile betätigt, während eine zweite Nockenwelle das andere Einlassventil und ebenfalls eines der belden bereits von der anderen Nockenwelle betätigten Auslassventile in Bewegung versetzen kann. Die zweite Nockenwelle ist gemäß Beschreibung von einer Verstelleinrichtung um einen festgelegten Winkel verdrehbar, so dass die Steuerung des von dieser Nockenwelle betätigten Einlassventils und des Auslassventils auf einen späteren Zeitpunkt verstellt wird. Bei dieser Anordnung wird das eine Auslassventil unter Zwischenschaltung von Schwinghebeln von beiden Nockenwellen zeitlich nachelnander betätigt, so dass im Steuerdiagramm dieses Ventils ein zweites Öffnen stattfindet (Figur 4, Figur 6) während die Einlassventile betätigt werden.

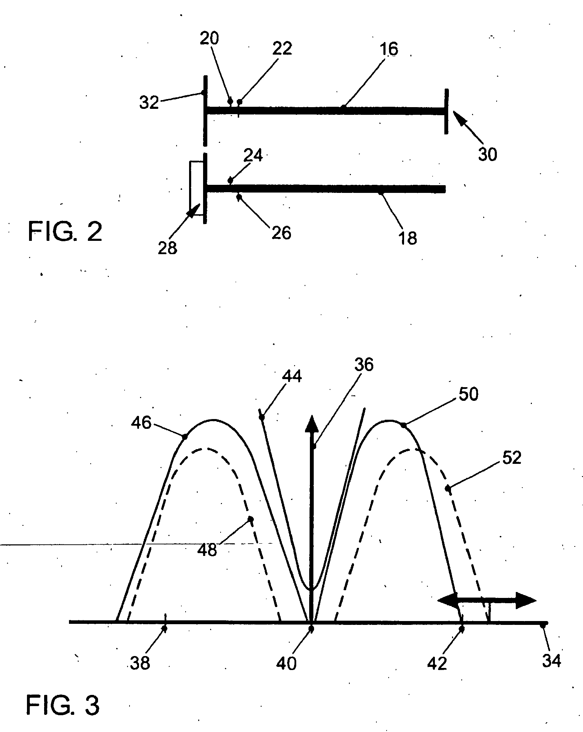

Weiterhin ist aus der DE 600 33 663 T2 eine vierventilige Otto-Brennkraftmaschine mit gemischten Nockenwellen derart bekannt, dass jede der zwei Nockenwellen pro Zylinder ein Einlass- und ein Auslassventil betätigt, wobei einer der Nockenwellen ein Phasensteller zugeordnet ist. Dieser Phasensteller wird in der üblichen Art und Weise dafür benutzt, die zugeordneten Steuerzeiten des jeweiligen Ein- und Auslassventils gegenüber den Steuerzeiten der feststehenden Ventile zu verschrieben, vergleiche insbesondere dort Figur 2b. Solche Maßnahmen führen bei einer selbstzündenden Brennkraftmaschine unweigerlich zur Kollision zwischen Gaswechselventilen und Hubkolben.

Die DE 601 19 993 T2 zeigt eine fremdgezündete Otto-Brennkraftmaschine mit vier Gaswechselventilen, wobei eine Nockenwelle beide Auslass- und eines der Einlassventile betätigt, wobei eine weitere Nockenwelle das zweite Einlassventil betätigen kann. Dieser zweiten Nockenwelle ist ein Phasensteller zugeordnet.

Die DE 101 22 775 A1 offenbart einen hybriden Motor mit zwei Nockenwellen, welcher wahlweise mit Homogener-Ladungs-Kompressionszündung (HCCI) oder Funkenzündung (SI) betrieben werden kann. Dazu kann der Motor durch Einsatz einer variablen Nockenwellen-Zeitsteuerung mit verschiedenen, für den gewählten Betriebsmodus geeigneten, Taktstrategien gesteuert werden. Für den SI-Verbrennungsmodus wird ein reduziertes effektives Kompressionsverhältnis unter Einsatz eines Atkinson-Taktes vorgeschlagen. Auch dieser Motor wird mit erheblicher Überschneidung der Öffnungszeiten der Einlass- und Auslassventile betrieben, weshalb die in dem Dokument gezeigte Lehre bei selbstzündenden Brennkraftmaschinen nicht eingesetzt werden kann.

Der Erfindung liegt die Aufgabe zugrunde, eine Brennkraftmaschine der o.g. Art hinsichtlich der Darstellung eines Miller/Atkinson-Cycles zu verbessern.

Diese Aufgabe wird erfindungsgemäß durch eine Brennkraftmaschine der o.g. Art mit den in Anspruch 1 und 6 gekennzeichneten Merkmalen gelöst. Vorteilhafte Ausgestaltungen der Erfindung sind in den weiteren Ansprüchen beschrieben.

Dazu ist es bei einer Brennkraftmaschine der o.g. Art erfindungsgemäß vorgesehen, dass an wenigstens einer Nockenwelle, die sowohl wenigstens ein Einlassventil als auch wenigstens ein Auslassventil betätigt, ein Versteller angeordnet ist, welcher Ventilsteuerzeiten der dieser Nockenwelle zugeordneten Ein- und Auslassventile gegenüber den Ventilsteuerzeiten der wenigstens einen anderen Nockenwelle wahlweise nach Früh oder Spät verstellt.

Dies hat den Vorteil, dass durch die Kombination eines Phasenstellers mit gemischten Nockenwellen, d.h. Nockenwellen, die gleichzeitig sowohl Einlass- als auch Auslassventile betätigen, ein Millerzyklus auf einfache Weise und sogar dort darstellbar ist, wo geometrische Einschränkungen hinsichtlich der Hubbewegung der Ventile bestehen, wie beispielsweise bei einem Dieselmotor.

Beispielsweise ist der Versteller derart ausgebildet, dass dieser einen Verstellbereich für die Ventilsteuerzeiten von 60°KW +/-20° aufweist.

Von großem Vorteil ist es zusätzlich, dass mit der erfindungsgemäßen Merkmalskombination ein verbessertes Abgas zu erzielen ist. So können in einem mit einer erfindungsgemäßen Brennkraftmaschine ausgestatteten Personenkraftwagen Stickoxidemissionen von unter 0,18 Gramm pro gefahrenen Kilometer erzielt werden, insbesondere 0,1 g bis 0,05 g. Somit werden die für die Europäische Union verbindlich festgelegten Emissionsstandards EU 5 und EU 6 bezüglich der NOx-Emissionen unterschritten. Diese schreiben für EU 5 einen Wert von 0,18 g/km und von 0,08 g/km für EU 6 vor.

Darüber hinaus sinkt die Partikelemission gegenüber herkömmlichen Konzepten deutlich ab, derart, dass Werte unterhalb von 0,005 Gramm pro gefahrenen Kilometer erzielt werden können, insbesondere von 0,004 g/km bis 0,002 g/km.

In einer bevorzugten Ausführungsform sind jedem Arbeitszylinder zwei Auslassventile zugeordnet, wobei zwei Nockenwellen vorgesehen sind, wobei eine erste Nockenwelle die eine Hälfte der Ein- und Auslassventile und eine zweite Nockenwelle die andere Hälfte der Ein- und Auslassventile betätigt, wobei die erste Nockenwelle feste Steuerzeiten für die dieser Nockenwelle zugeordneten Ventile aufweist und an der zweiten Nockenwelle der Versteller angeordnet ist.

Einen besonders großen Verstellbereich auch bei Dieselmotoren ohne Kollision zwischen Ventilen und Hubkolben erzielt man dadurch, dass die zweite Nockenwelle derart ausgebildet ist, dass bei einem Verstellwinkel von 0°KW die der zweiten Nockenwelle zugeordneten Auslassventile früher schließen als die der ersten Nockenwelle zugeordneten Auslassventile und die der zweiten Nockenwelle zugeordneten Einlassventile später öffnen und später schließen als die der ersten Nockenwelle zugeordneten Einlassventile.

Alternativ ist die zweite Nockenwelle derart ausgebildet, dass bei einem Verstellwinkel von 0°KW die der zweiten Nockenwelle zugeordneten Einlassventile gleichzeitig mit den der ersten Nockenwelle zugeordneten Einlassventilen schließen. In diesem Fall erfolgt ausschließlich eine Spätverstellung.

Ein erfindungsgemäßes Verfahren zum Betreiben einer nach dem Selbstzündverfahren betriebenen Brennkraftmaschine sieht vor, dass an der wenigstens einen Nockenwelle, die sowohl wenigstens ein Einlassventil als auch wenigstens ein Auslassventil betätigt der zugeordnete Steller so betätigt wird, dass Ventilsteuerzeiten der dieser Nockenwelle zugeordneten Ein- und Auslassventile gegenüber den Ventilsteuerzeiten der anderen Nockenwelle wahlweise nach früh oder spät verstellt werden.

Die Erfindung wird im Folgenden anhand der Zeichnung näher erläutert. Diese zeigt in
- Fig. 1: eine bevorzugte Ausführungsform einer erfindungsgemäßen Brennkraftmaschine in schematischer Ansicht,
- Fig. 2: eine schematische Darstellung der Nockenwellenanordnung bei der erfindungsgemäßen Brennkraftmaschine gemäß Fig. 1,
- Fig. 3: eine graphische Darstellung der Ventilbewegung von Einlass- und Auslassventilen der verschiedenen Nockenwellen und der Kolbenbewegung bei einem Verstellwinkel von 0°KW,
- Fig. 4: eine graphische Darstellung der Ventilbewegung von Einlass- und Auslassventilen der verschiedenen Nockenwellen und der Kolbenbewegung bei maximaler Verstellung in Richtung Früh und
- Fig. 5: eine graphische Darstellung der Ventilbewegung von Einlass- und Auslassventilen der verschiedenen Nockenwellen und der Kolbenbewegung bei maximaler Verstellung in Richtung Spät.

Die in Fig. 1 dargestellte, bevorzugte Ausführungsform einer erfindungemäßen Brennkraftmaschine umfasst einen Zylinderkopf 10, welcher nicht näher dargestellte Arbeitszylinder begrenzt, in denen sich jeweils ein Hubkolben (nicht dargestellt) oszillierend bewegt. Der Zylinderkopf 10 weist eine Auslassseite 12 auf, an der Abgase aus den Arbeitszylindern abgeführt werden, und eine Einlassseite 14 auf, an der den Arbeitszylindern Frischgas zugeführt wird.

Jedem Arbeitszylinder sind zwei Einlassventile (nicht dargestellt) und zwei Auslassventile (nicht dargestellt) zugeordnet, wobei eine erste Nockenwelle 16 und eine zweite Nockenwelle 18 vorgesehen sind. Die erste Nockwelle 16 trägt Einlassnocken 20, die jeweils ein Einlassventil betätigen, und Auslassnocken 22, die jeweils ein Auslassventil betätigen. Ebenso trägt die zweite Nockenwelle 18 Einlassnocken 24, die jeweils ein Einlassventil betätigen, und Auslassnocken 26, die jeweils ein Auslassventil betätigen. Auf beiden Nockenwellen 16, 18 wechseln sich in Längsrichtung gesehen jeweils Einlassnocken 20, 24 und Auslassnocken 22, 26 ab. Auf diese Weise werden die beiden Einlassventile und Auslassventile eines jeden Arbeitszylinders von verschiedenen Nockenwellen 16, 18 betätigt. Wie insbesondere zusätzlich aus Fig. 2 hervorgeht, ist somit jede der Nockenwellen 16, 18 eine so genannte gemischte Nockenwellen, d.h. jede Nockenwelle 16, 18 betätigt sowohl Einlass- als auch Auslassventile über entsprechende Einlassnocken 20, 24 bzw. Auslassnocken 22, 26.

Unabhängig von der Anzahl der jedem Arbeitszylinder zugeordneten Anzahl von Gaswechselventilen werden immer alle Gaswechselventile in ihrer Gesamtheit von den zwei Nockenwellen betätigt.

Die Steuerzeiten der ersten Nockenwelle 16 für die dieser zugeordneten Einlass- und Auslassventile sind unveränderbar festgelegt. An der zweiten Nockenwelle 18 ist ein Versteller 28 angeordnet, welcher die Steuerzeiten der dieser zugeordneten Einlass- und Auslassventile gegenüber den Steuerzeiten der ersten Nockenwelle 16 verändert, indem die zweite Nockenwelle 18 durch den Versteller 28 relativ zur ersten Nockenwelle 16 verdreht wird. Die erste Nockenwelle 16 ist diejenige Nockenwelle, die bei 30 von einer nicht dargestellten Kurbelwelle der Brennkraftmaschine angetrieben wird. Die erste Nockenwelle 16 treibt dann ihrerseits über Zahnräder 32 die zweite Nockenwelle 18 an.

In den Fig. 3 bis 5 ist auf einer horizontalen Achse 34 ein Kurbelwinkel und auf einer vertikalen Achse 36 eine Hubbewegung aufgetragen. Auf der horizontalen Achse 34 ist bei 38 ein unterer Totpunkt (UT) des Hubkolbens vor dem Ladungswechsel, bei 40 ein oberer Totpunkt (OT) des Hubkolbens während des Ladungswechsels und bei 42 ein unterer Totpunkt (UT) des Hubkolbens nach dem Ladungswechsel aufgetragen. Ein erster Graph 44 veranschaulicht die Hubbewegung 36 über den Kurbelwinkel 34 für den Kolben, ein zweiter Graph 46 veranschaulicht die Hubbewegung 36 über den Kurbelwinkel 34 für diejenigen Auslassventile, die von den Auslassnocken 22 der ersten Nockenwelle 16 gesteuert werden, ein dritter Graph 48 (gestrichelt) veranschaulicht die Hubbewegung 36 über den Kurbelwinkel 34 für diejenigen Auslassventile, die von den Auslassnocken 26 der zweiten Nockenwelle 18 gesteuert werden, ein vierter Graph 50 veranschaulicht die Hubbewegung 36 über den Kurbelwinkel 34 für diejenigen Einlassventile, die von den Einlassnocken 20 der ersten Nockenwelle 16 gesteuert werden und ein fünfter Graph 52 (gestrichelt) veranschaulicht die Hubbewegung 36 über den Kurbelwinkel 34 für diejenigen Einlassventile, die von den Einlassnocken 24 der zweiten Nockenwelle 18 gesteuert werden.

In Fig. 3 ist eine Stellung des Verstellers 28 mit 0°KW dargestellt, d.h. die Nockenwellen 16, 18 sind nicht gegeneinander verdreht. In Fig. 4 ist eine Stellung des Verstellers bei maximaler Verstellung in Richtung Spät und in Fig. 5 ist eine Stellung des Verstellers bei maximaler Verstellung in Richtung Früh dargestellt. Wie aus den Fig. 2 bis 5 unmittelbar ersichtlich, bleibt die Hubbewegung der Ventile der ersten Nockenwelle 16 (zweiter Graph 46 und vierter Graph 50) relativ zur Kurbelwelle unverändert, wohingegen die Hubbewegung der Ventile der zweiten Nockenwelle 18 (dritter Graph 48 und fünfter Graph 52 jeweils gestrichelt) gemeinsam für die zugeordneten Einlassventile und Auslassventile verschoben werden. Hierdurch kann einerseits durch die verschobenen Öffnungszeiten zwischen den Einlassventilen der ersten Nockenwelle 16 (Einlassnocken 20; vierter Graph 50) und den Einlassventilen der zweiten Nockenwelle 18 (Einlassnocken 24; fünfter Graph 52) ein Millereffekt simuliert werden (Fig. 3), wobei andererseits eine Kollision zwischen den Einlassventilen und dem Hubkolben verhindert ist.

Vorraussetzung für dieses stimulierte Millern ist das Vorhandensein von mindestens zwei Einlassventilen pro Arbeitszylinder und einem, vorzugsweise zwei Auslassventilen pro Arbeitszylinder, wobei die Einlassventile eines jeden Arbeitszylinders von verschiedenen Nockenwellen betätigt werden. Hierbei bedient eine Nockenwelle 16 die Hälfte aller Ein- und Auslassventile mit konventionellen Steuerzeiten. Alternativ ist einlassseitig auf maximale Füllung an einem bestimmten Betriebspunkt, beispielsweise für den Betriebspunkt Kaltstart, optimierte. Die zweite Nockenwelle 18 bedient die verbleibenden Ein- und Auslassventile und ist hinsichtlich der Nockenkontur für "Auslassventil schließt" und "Einlassventil öffnet" so ausgelegt, dass ein Verstellbereich dieser Nockenwelle 18 von ca. 60° KW +/-20° ohne Kolbenkollision stattfinden kann.

Der Millereffekt wird dadurch erzielt, dass das früheste "Einlassventil öffnet" der einen Nockenwelle 16 und das späteste "Einlassventil schließt" der anderen Nockenwelle 18 unterschiedlichen Ventilen für jeden Arbeitszylinder zugeordnet ist, vgl. Fig. 4.

Eine Anhebung der Verdichtungsendtemperatur ist dadurch möglich, dass bei "Einlassventil schließt" derfesten Nockenwelle 16 (vierter Graph 50) im UT 42 die zweite Nockenwelle 18 (Millerwelle) ebenfalls in Richtung Früh verschoben wird (fünfter Graph 52; vgl. Fig. 5). Gleichzeitig kann so eine Anhebung der Abgastemperatur (wichtig für Abgasnachbehandlung) durch ein Frühschieben des "Auslassventil öffnet" der Millerwelle 18 (dritter Graph 48) erfolgen, wie in Fig. 5 dargestellt. Dies kann ein schnelles Aufheizen eines Abgaskatalysators nach einem Kaltstart unterstützten.

Die erste Nockenwelle 16 hat ein ES bei ca. = UT 42, um das maximale Verdichtungsverhältnis bei Frühverstellung der zweiten Nockenwelle 18 zu erzielen. Alternativ zu der in Fig. 3 dargestellten Situation bei 0°-Verstellung des Verstellers 28 kann auch dies als 0° Position für die zweite Nockenwelle 18 betrachtet werden, so dass dann nur noch eine Spätverstellung erfolgt. Wichtig ist aber in jedem Fall, dass der Einlassnocken von der ersten Nockenwelle 16 im Vergleich zu beispielsweise bei Dieselmotoren üblichem ES bei ca. 10°-25°KW nach UT derart gekürzt ist, dass die UT Position ES durch beide Nocken erzielt werden kann.

## Patentansprüche

1. Brennkraftmaschine, betrieben nach dem Selbstzündverfahren mit wenigstens einem Arbeitszylinder, wobei jedem Arbeitszylinder wenigstens zwei Einlassventile und wenigstens ein Auslassventil zugeordnet ist, wobei zwei Nockenwellen (16, 18) vorgesehen sind, von denen eine Nockenwelle (16, 18) sowohl wenigstens ein Einlassventil als auch wenigstens ein Auslassventil betätigt, und wobei jedes der Ein- und Auslassventile nur einer Nockenwelle (16, 18) zugeordnet ist, **dadurch gekennzeichnet, dass** an der einen Nockenwelle (18), die sowohl wenigstens ein Einlassventil als auch wenigstens ein Auslassventil betätigt, ein Versteller (28) angeordnet ist, welcher Ventilsteuerzeiten der dieser Nockenwelle (18) zugeordneten Ein- und Auslassventile gegenüber den Ventilsteuerzeiten der anderen Nockenwelle (16) wahlweise nach Früh oder Spät verstellt.

2. Brennkraftmaschine nach Anspruch 1, **dadurch gekennzeichnet, dass** der Versteller (28) derart ausgebildet ist, dass dieser einen Verstellbereich für die Ventilsteuerzeiten von 60°KW +/-20° aufweist.

3. Brennkraftmaschine nach wenigstens einem der vorhergehenden Ansprüche, **dadurch gekennzeichnet, dass** jedem Arbeitszylinder zwei Auslassventile zugeordnet sind, wobei die eine, erste Nockenwelle (16) die eine Hälfte der Ein- und Auslassventile und die zweite Nockenwelle (18) die andere Hälfte der Ein- und Auslassventile betätigt, wobei die erste Nockenwelle (16) feste Steuerzeiten für die dieser Nockenwelle (16) zugeordneten Ventile aufweist und an der zweiten Nockenwelle (18) der Versteller (28) angeordnet ist.

4. Brennkraftmaschine nach Anspruch 3, **dadurch gekennzeichnet, dass** die zweite Nockenwelle (18) derart ausgebildet ist, dass bei einem Verstellwinkel von 0°KW die der zweiten Nockenwelle (18) zugeordneten Auslassventile früher schließen als die der ersten Nockenwelle (16) zugeordneten Auslassventile und die der zweiten Nockenwelle (18) zugeordneten Einlassventile später öffnen und später schließen als die der ersten Nockenwelle (16) zugeordneten Einlassventile.

5. Brennkraftmaschine nach Anspruch 3, **dadurch gekennzeichnet, dass** die zweite Nockenwelle (18) derart ausgebildet ist, dass bei einem Verstellwinkel von 0°KW die der zweiten Nockenwelle (18) zugeordneten Einlassventile gleichzeitig mit den der ersten Nockenwelle (16) zugeordneten Einlassventilen schließen.

6. Verfahren zum Betreiben einer nach dem Selbstzündverfahren betriebenen Brennkraftmaschine mit wenigstens einem Arbeitszylinder, wobei jedem Arbeitszylinder wenigstens zwei Einlassventile und wenigstens ein Auslassventil zugeordnet ist, wobei zwei Nockenwellen (16, 18) vorgesehen sind, wobei sowohl wenigstens ein Einlassventil als auch wenigstens ein Auslassventil von wenigstens einer der Nockenwellen betätigbar sind, wobei jedes der Ein- und Auslassventile nur einer Nockenwelle (16, 18) zugeordnet ist, **dadurch gekennzeichnet, dass** der einen Nockenwelle (18), die sowohl wenigstens ein Einlassventil als auch wenigstens ein Auslassventil betätigt, ein Versteller (28) zugeordnet ist, welcher Ventilsteuerzeiten der dieser Nockenwelle (18) zugeordneten Ein- und Auslassventile gegenüber den Ventilsteuerzeiten der anderen Nockenwelle (16) wahlweise nach früh oder spät verstellt.

7. Brennkraftmaschine nach einem der Ansprüche 1 bis 5, **dadurch gekennzeichnet, dass** die Brennkraftmaschine die Brennkraftmaschine eines Kraftfahrzeuges ist.

## Claims

1. Internal combustion engine, operated according to the auto-ignition principle having at least one working cylinder, with each working cylinder being assigned at least two inlet valves and at least one outlet valve, with two camshafts (16, 18) being provided, of which one camshaft (16, 18) actuates both at least one inlet valve and also at least one outlet valve, and each of the inlet and outlet valves being assigned to only one camshaft (16, 18), **characterized in that** an adjuster (28) is arranged on the one camshaft (18) which actuates both at least one inlet valve and also at least one outlet valve, which adjuster (28) selectively adjusts valve control times of the inlet and outlet valves assigned to said camshaft (18) in the early or late direction in relation to the valve control times of the other camshaft (16).

2. Internal combustion engine according to Claim 1, **characterized in that** the adjuster (28) is designed so as to have an adjustment range for the valve control times of 60°CA +/- 20°.

3. Internal combustion engine according to at least one of the preceding claims, **characterized in that** each working cylinder is assigned two outlet valves, with the one, first camshaft (16) actuating the one half of the inlet and outlet valves and the second camshaft (18) actuating the other half of the inlet and outlet valves, with the first camshaft (16) having fixed control times for the valves assigned to said camshaft (16) and with the adjuster (28) being arranged on the second camshaft (18).

4. Internal combustion engine according to Claim 3, **characterized in that** the second camshaft (18) is designed such that, at an adjustment angle of 0°CA, the outlet valves assigned to the second camshaft (18) close earlier than the outlet valves assigned to the first camshaft (16), and the inlet valves assigned to the second camshaft (18) open later and close later than the inlet valves assigned to the first camshaft (16).

5. The internal combustion engine according to Claim 3, **characterized in that** the second camshaft (18) is designed such that, at an adjustment angle of 0°CA, the inlet valves assigned to the second camshaft (18) close at the same time as the inlet valves assigned to the first camshaft (16).

6. Method for operating an internal combustion engine, operated according to the auto-ignition principle having at least one working cylinder, with each working cylinder being assigned at least two inlet valves and at least one outlet valve, with two camshafts (16, 18) being provided, with it being possible for both at least one inlet valve and also at least one outlet valve to be actuated by at least one of the camshafts (16, 18), and each of the inlet and outlet valves being assigned to only one camshaft (16, 18), **characterized in that** the one camshaft (18) which actuates both at least one inlet valve and also at least one outlet valve is assigned an adjuster (28) which selectively adjusts valve control times of the inlet and outlet valves assigned to said camshaft (18) in the early or late direction in relation to the valve control times of the other camshaft (16).

7. Internal combustion engine according to one of Claims 1 to 5, **characterized in that** the internal combustion engine is the internal combustion engine of a motor vehicle.

## Revendications

1. Moteur à combustion interne, fonctionnant selon le procédé d'autoallumage, comprenant au moins un cylindre de travail, au moins deux soupapes d'admission et au moins une soupape d'échappement étant associées à chaque cylindre de travail, deux arbres à cames (16, 18) étant prévus, parmi lesquels un arbre à cames (16, 18) actionne à la fois au moins une soupape d'admission et au moins une soupape d'échappement, et chacune des soupapes d'admission et d'échappement n'étant associée qu'à un arbre à cames (16, 18), **caractérisé en ce qu'**un dispositif de réglage (28) est disposé sur l'un des arbres à cames (18), qui actionne à la fois au moins une soupape d'admission et au moins une soupape d'échappement, lequel dispositif de réglage règle de manière sélective en avance ou en retard les temps de commande de soupape des soupapes d'admission et d'échappement associées à cet arbre à cames (18) par rapport aux temps de commande de soupape dé l'autre arbre à cames (16).

2. Moteur à combustion interne selon la revendication 1, **caractérisé en ce que** le dispositif de réglage (28) est réalisé de telle sorte qu'il présente une plage de réglage pour les temps de commande de soupape de 60°KW (angle de vilebrequin) +/-20°.

3. Moteur à combustion interne selon au moins l'une quelconque des revendications précédentes, **caractérisé en ce que** deux soupapes d'échappement sont associées à chaque cylindre de travail, un premier arbre à cames (16) actionnant une moitié des soupapes d'admission et d'échappement et le deuxième arbre à cames (18) actionnant l'autre moitié des soupapes d'admission et d'échappement, le premier arbre à cames (16) présentant des temps de commande fixes pour les soupapes associées à cet arbre à cames (16) et le dispositif de réglage (28) étant disposé sur le deuxième arbre à cames (18).

4. Moteur à combustion interne selon la revendication 3, **caractérisé en ce que** le deuxième arbre à cames (18) est réalisé de telle sorte que, pour un angle de réglage de 0°KW, les soupapes d'échappement associées au deuxième arbre à cames (18) se ferment plus tôt que les soupapes d'échappement associées au premier arbre à cames (16), et que les soupapes d'admission associées au deuxième arbre à cames (18) s'ouvrent plus tard et se ferment plus tard que les soupapes d'admission associées au premier arbre à cames (16).

5. Moteur à combustion interne selon la revendication 3, **caractérisé en ce que** le deuxième arbre à cames (18) est réalisé de telle sorte que, pour un angle de réglage de 0°KW, les soupapes d'admission associées au deuxième arbre à cames (18) se ferment en même temps que les soupapes d'admission associées au premier arbre à cames (16).

6. Procédé de fonctionnement d'un moteur à combustion interne fonctionnant selon le procédé d'autoallumage, comprenant au moins un cylindre de travail, au moins deux soupapes d'admission et au moins une soupape d'échappement étant associées à chaque cylindre de travail, deux arbres à cames (16, 18) étant prévus, à la fois au moins une soupape d'admission et au moins une soupape d'échappement pouvant être actionnées par au moins l'un des arbres à cames (16, 18), et chacune des soupapes d'admission et d'échappement n'étant associée qu'à un arbre à cames (16, 18), **caractérisé en ce que** l'un des arbres à cames (18) qui actionne à la fois au moins une soupape d'admission et au moins une soupape d'échappement est associé à un dispositif de réglage (28), lequel dispositif de réglage règle de manière sélective en avance ou en retard les temps de commande de soupape des soupapes d'admission et d'échappement associées à cet arbre à cames (18) par rapport aux temps de commande de soupape de l'autre arbre à cames (16).

7. Moteur à combustion interne selon l'une quelconque des revendications 1 à 5, **caractérisé en ce que** le moteur à combustion interne est le moteur à combustion interne d'un véhicule automobile.
